# EUROPEAN PATENT APPLICATION

(11) **EP 0 572 070 A1**
(43) Date of publication of application: **01.12.1993**
(21) Application number: 93201438.4
(22) Date of filing: 19.05.1993
(51) Int. Cl.: F16B 5/06, B62D 33/04, B62D 27/02

(54) **A modular element wall of the kind assembled from extruded sectional bars, particularly for the bodies of cargo vans and/or road freight vehicles**

(30) Priority: 26.05.1992 IT MI921289
(71) Applicant: ALUMIX S.p.A., I-00144 Roma (IT)
(72) Inventor: Vitelli, Isaia, I-04018 Sezze, Latina (IT)
(74) Representative: Perani, Aurelio

(57) **Abstract**

A wall for the caissons of vans and/or generic road freight vehicles is made of sections assembled into modular elements (M), each comprising at least two structural sections having at respective opposite ends (5a,5b) of a straight central portion (5) of their cross-section (4) a male connection element (7) and a female connection element (10).

Each modular element (M) further includes a tie section (3) having a substantially U-shaped cross-section formed, at its free ends (22a,23a), with hooking ribs (24,25) adapted to engage in corresponding means (12,13) of connection provided on the structural sections (2).

## Description

This invention relates to a modular elements wall, of the kind made of extruded sections and particularly intended for caissons of vans and/or generic road freight vehicles.

In the field of road freight vehicles, designs of lorries, vans and similars having sidewalls or tailgates of their caissons assembled from sections are well-known. Such sidewalls are usually made up of modular elements wherein the sections are mounted side-by-side, connecting their respective coupling means.

In order to fulfill some of the requirements related with the construction of such sidewalls and for meeting the strength specifications imposed by the stresses to which they are subjected in the normal using of the lorries, it is necessary for the sidewalls or tailgates to be provided with two essential features: simplicity in their connection and good mechanical strength especially in relationship with their weight.

As for the latter feature, it should be considered, in fact, that weight is a cost factor in freight transportation by road, and therefore its reduction is another important requirement for the sidewalls and the sections they are made of, which provides significant economical savings.

Understandably, it is not to be excluded that these considerations may be extended to walls or similars used in industrial fields other than the aforementioned road freight vehicles.

It is the object of this invention to provide a modular elements wall made of sections, particularly for caissons of vans and generic road freight vehicles, which have such construction and working features to meet the above-described demands; that is to say a light weight wall, easy to assemble, and having a high mechanical strength.

This and other objects that will become more apparent hereinafter, are achieved by a wall as indicated in the foregoing and characterized in the main claim.

Further features and the advantages of the invention can be more clearly understood from the following description of an embodiment thereof, given by way of non-limitative example with reference to the accompanying drawings, in which:
Figure 1 is a cutaway perspective view of a motor-lorry according to the invention;
Figure 2 is a cross-sectional view of a first embodiment of a first section according to the invention;
Figure 3 is a cross-sectional view of a first embodiment of a second section according to the invention;
Figures 4 and 5 are cross-sectional views of two segments of sections of the kind shown in Figure 2 and a section of the kind shown in Figure 3, at successive stages of their assembly;
Figure 6 is a cross-sectional view of a second embodiment of the first section according to the invention;
Figure 7 is a cross-sectional view of a second embodiment of the second section according to the invention;
Figures 8 and 9 are cross-sectional views of two segments of sections of the kind shown in Figure 6 and a section of the kind shown in Figure 7, at successive stages of their assembly; and
Figure 10 is a detail view of the motor-lorry in Figure 1.

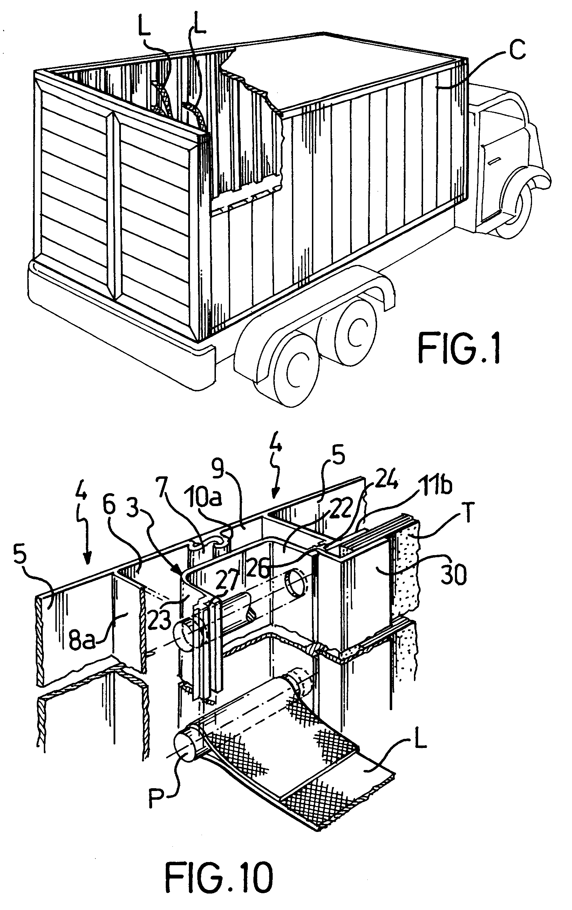

With reference to the drawing views, and specifically to Figure 1, there is shown a motor-lorry having a caisson C which comprises a plurality of walls 1 according to this invention; each of said walls is made up of a plurality of sections 2 and 3 according to the invention.

In particular, such sections 2 and 3 can be assembled together into modular elements M, each comprising at least two structural sections 2 and one connecting section 3 assembled together as explained hereinafter.

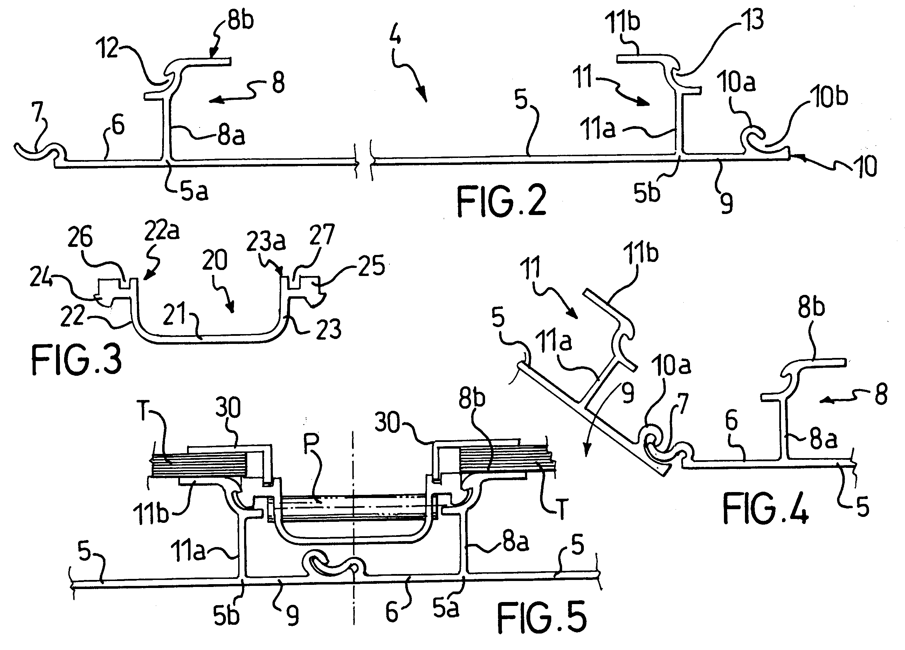

A structural section 2 will now be described with reference to Figure 2 which shows a cross-section 4 thereof; said cross-section includes a straight central portion 5 extending between a first and a second end 5a and 5b, respectively.

At the first end 5a, the cross-section 4 has a first straight appendix 6 lying on the prolongation of the central portion 5; this appendix 6 is provided at its tip remote from the end 5a with a male connection element 7 having a mainly curved longitudinal spread and projecting from the appendix similarly to a bayonet.

The cross-section 4 also has, located at the end 5a, a first fin 8 comprising two straight segments 8a and 8b lying at right angle one another, wherein the first, 8a, extends perpendicularly to the portion 5, and the second, 8b, juts out parallel to the portion 5 toward the second end 5b.

Located on the second end 5b of the portion 5, in a similar arrangement to the first end 5a, is a second straight appendix 9 lying on the continuation of the portion 5 and carrying a female connection element 10 on its tip; specifically, the connection element 10 comprises here a hooked projection 10a jutting out from the appendix 9 on the same side of the first fin 8, and a seat 10b formed in the tip of the appendix 9.

Said projection 10a and seat 10b jointly define a profile matching the one of the curved male connection element 7.

Further, a second fin 11 is provided on the second end 5b of the central portion 5; this fin comprises two straight segments 11a and 11b at right angle one another, wherein the first, 11a, extends perpendicularly to the portion 5 and the second, 11b, juts out parallel to the portion 5 toward the first end 5a.

In this embodiment of the structural section 2, the fins 8 and 11 are provided with respective secondary connection means 12 of the female type; in particular, such secondary means 12 locate on the segments 8a and 11a, respectively, of the fins 8 and 11, on the side thereof facing the appendices 6 and 9.

Each of the secondary means 12 comprises a hollow 12a defined by two ribs 12b and 12c which are formed on the surfaces of said segments 8a and 11a.

As previously mentioned, each modular element M making up the walls and constructed in accordance with the invention comprises a tie section 3: the latter is of the kind shown in Figure 3 having a U-shaped cross-section with a central portion 21 and two wings 22 and 23. Said wings are each provided, on a respective free end 22a and 23a, with a hooking rib 24 and 25, of the male type and a groove, 26 and 27.

Further, the tie section 3 is provided in its wings 22 and 23 with holes F being oppositely located in pairs along its longitudinal spread and adapted to receive pins P to be described.

Advantageously in a preferred embodiment of the invention, the inventive walls may be provided (see Figures 4 and 5) with a conventional panel T, such as a common covering board fastened to the tie sections 3 by two angle bars 30 engaged in the grooves 26 and 27, respectively.

The process of assembling walls from sections according to the invention will be described herein below with reference to a single modular element M, included in the aforementioned caisson C and composed of two structural sections 2 adjacent to each other and a tie section 3; of course, the following comments would equally apply to all the sections which make up the caisson C walls.

For carrying out the assembling, the female connection element 10 of one structural section 2 is engaged with the connection element 7 of an adjacent structural section, by bringing them to abut each other.

With reference to Figures 4 and 5, shown therein is the manner of engaging the connection elements 7 and 10 together; the two sections 2 are brought into mutual abutment holding them at an inclination angle about respective directions defined by the straight portions 5 of each bar. Once the connection elements 7 and 10 become engaged, the sections are rotated relatively to each other so as to allow the curved male element 7 to slide along the matching profile of the female element 10.

On completion of this step, the male connection element 7 will be an interfit, with its end portion under the hooked projection 10a, and bear on the seat 10b with a segment of its curving spread.

Once the two structural sections 2 are joined together, the tie section 3 is mounted; the hooking ribs 24 and 25 of the latter snap into the secondary means 12, 13 of connection of the structural sections 2. The modular element M is thus completed and can later be installed on the vehicle.

On the inventive wall, the structural sections define, on the opposite side from the fins 8 and 11, a smooth continuous surface intended to lie on the outside of the caisson C.

Inside said caisson, that is on the same side of the fins 8 and 11, the walls may be completed with panels for facing the walls.

There are several advantages that derive from the walls of this invention.

It should be emphasized, in fact, that the sections according to this invention are easily assembled, and result very lightened; this is accomplished by the fact that their cross-section is not of the closed type, i.e. having a geometrically closed cross-sectional configuration such as the square or rectangular shapes commonly found in standard commercial sections.

In addition, the possibility of applying panels, afforded by the peculiar shape of the flanges 8 and 11, greatly enhances the versatility of the inventive wall.

Furthermore, these walls can be assembled in an accurate and prompt manner by virtue of the simple form of interconnection provided for the sections; in fact, the coupling of the connection elements 7 and 10 enables the straight portions of the structural sections to be first correctly aligned, and then the tie section to be easily inserted afterwards.

Another important result of this invention is that the walls are endowed with outstanding mechanical strength by the secure connection provided for their sectional bars.

This is achieved by the fact that the tie section is effective to avoid counter-rotation of the two structural sections of each module, in the opposite direction to that of the aforementioned rotation whereby said structural sections are engaged.

It should be noted that such counter-rotations would cause the structural sections to load the tie section in accordance with its best mechanical and elastic resistance characteristics provided by its shape; in fact, the wings 22 and 23 of the tie section, on the occurrence of counter-rotation, would be loaded to bend toward the central portion 21. Thanks to the shape of the wings and the engagement ribs 24 and 25, however, the tie section resists to the counter-rotation, which nay, helps the rib engagement with their corresponding secondary means 12 of connection.

Another advantage deriving from this invention is that walls made with the inventive sections, advantageously present areas which are usefully available for a range of transportation needs. It is for this purpose that the holes F are provided in the tie sections; they can receive, in fact, the pins P that provide convenient support for belts L stretched across the caisson to hold cargo items therein (see Figures 1 and 10).

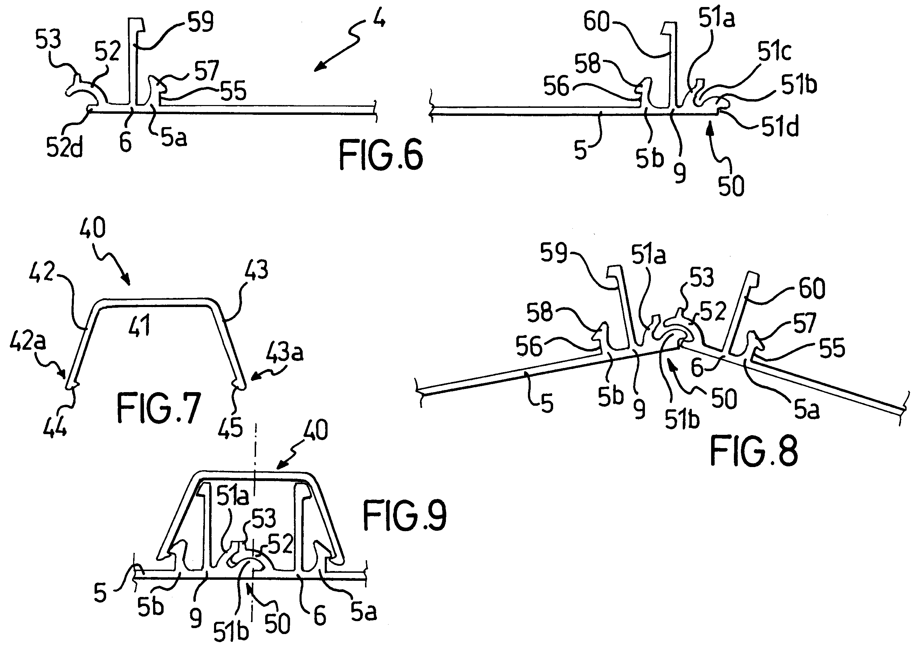

A second embodiment of the invention will now be described with reference to Figures 6-8.

In those Figures, elements which are equivalent in construction and function to those previously described in connection with the first embodiment, are denoted by the same reference numerals and will be no further described.

In this further embodiment of the invention, a structural section 2 has a cross-sectional configuration 4 which comprises a central portion 5 terminating with a straight appendix 9 at its end 5b; the straight appendix 9 is formed with a female connection element 50. Said connection element 50 comprises a curved projection 51a and an extension head 51b of the appendix 9 which jointly define a curved seat 51c; advantageously, an abutment step 51d is formed in said head 51b.

In this second embodiment of the structural section 2, an appendix 6 is also provided on the first end 5a of the portion 5 which carries a male connection element 52 having an arcuate longitudinal spread and a projecting rib 53 from its surface. The appendix 6 is further provided, on its free end, with a tip 52d adapted to engage said step 51d.

At each of the ends 5a and 5b of the central portion 5, there is formed a respective fin 55 and 56 which extends perpendicularly to the central portion 5 and has a secondary connection means formed by an engagement projection 57, 58 turned toward the portion 5, whereby the fin has a spike shape.

Further, from the appendices 6 and 9 there extends, parallel to the fins 55 and 56, a respective straight support fins 59 and 60 having a longer longitudinal spread than the fins 55 and 56.

In this second embodiment of the invention, a module M of the wall includes a tie section 3 having an open trapezoidal cross-section 40 which comprises a central portion 41 and two wings 42 and 43; the last-mentioned wings being formed with an engagement rib 44 and 45 for engagement with the corresponding projections 57 and 58 on the fins 55 and 56.

Notice that the inclination angle of the structural sections according to this second embodiment of the invention, that is the angle between the straight directions of the respective central portions 5, is substantially symmetrical, about the wall formed by the two structural sections as eventually assembled together, of the inclination angle of the structural sections in the first embodiment, for mutual connection.

As a result, in order to oppose counter-rotations tending to separate the structural sections, the tie section 3 is provided in this second example with the ribs 44 and 45. These are arranged such that a possible counter-rotation movement of the structural sections, and hence of the fins 55 and 56 thereon, would help the engagement of the projections 57 and 58 with said ribs 42a and 43a, thereby providing for an enhanced securement of the connection between adjacent sections. In addition, the two support fins 59 and 60 will contribute to render more secure the interconnection of the sections by preventing elastic deformation of the tie section 40.

In general, from a comparison of the two embodiments described, the constructional and functional similarity of the various sections parts may be appreciated; noticeable differences are substantially due to the different ways that their connection is established, specifically the different direction of the rotational movements whereby the structural sections are engaged.

Thus, such embodiments are basically equivalent.

Notice, moreover, that in either cases the section connection is symmetrical about a median plane indicated by a dashed line in the drawings and passing through the coupled connection elements 7 and 10; this symmetrical feature will allow a balanced distribution of the stresses to which the sections and their various connective portions may be subjected.

Finally, the shape of the sections according to the invention may be modified, for example to satisfy specific applicational or manufacturing conditions. Indeed it could be that one of the structural sections and the tie section were made together, i.e. form a single section. For this purpose, the tie section should be joined where it connects to the structural section, in its final assembled configuration. Of course, the constructional and geometric features previously discussed which provide the wall of this invention with the above-described functional characteristics would have to be retained in any event.

Neither this nor any other possible variations alter the essential features of the invention as described in the foregoing and defined in the appended claims.

## Claims

1. A modular elements (M) wall of the kind made of extruded sections and particularly intended for caissons of vans and generic road freight vehicles, characterized in that each modular element (M) comprises:
at least two structural sections (2), each having a respective cross-section (4) which comprises a substantially straight central portion (5) provided with two appendices (6,9) extending from respective opposite ends (5a,5b) of the central portion (5) on the prolongation thereof and being respectively provided with a male connection element (7 and 53) and a female connection element (10 and 50) for interconnecting said structural sections (2), the latter being arranged, once interconnected, to lie with their central portions (5) aligned continuously thereby forming the wall, said cross-sections (4) being also provided, on each of said ends (5a,5b), respectively with first and second fins (8,11 and 55,56), both jutting out from the same side of the central portion (5) and provided with means (12,13 and 57,58) of connection;
a tie section (3) having a substantially U-shaped cross-section (20,40) which comprises a central portion (21 and 41) and two wings (22,23 and 42,43) extending therefrom provided, at respective free ends (22a,23a and 42a,43a), with hooking rib (24,25 and 44,45) adapted to engage with said means (12,13 and 57,58) of connection on the two interconnected structural sections (2).

2. A wall according to Claim 1, characterized in that said male connection element (7) has a mainly arcuate longitudinal spread and said female connection element (10) is formed with a substantially hooked projection (10a) and a seat (10b) which define a profile matching with the one of the male connection element (7).

3. A wall according to Claim 2, characterized in that said first and second fins (8 and 11) respectively comprise a first and a second straight segment (8a,8b and 11a,11b) lying at right angle to each other, wherein the first straight segment (8a and 11a) extends perpendicularly to the portion (5) and the second straight segment (8b and 11b) extends parallel to the latter toward the other fin (8 and 11).

4. A wall according to Claim 3, characterized in that said wings (22,23) of the tie section (3) are formed, at their respective free ends (22a,23a), with a groove (26,27), and that the wall further comprises, for each modular element (M), at least one angle bar (30) adapted for engagement in said grooves (26,27) to secure a panel (T).

5. A wall according to Claim 1, characterized in that it comprises, on each of said lugs (6,9), a support fin (59,60) whose longitudinal spread is longer than the one of said first and second fins (55,56) and that lies parallel to and on the same side as the latter.
